# EUROPEAN PATENT APPLICATION

(11) **EP 4 528 543 A1**
(43) Date of publication of application: **26.03.2025**
(21) Application number: 23826116.8
(22) Date of filing: 01.06.2023
(51) Int. Cl.: G06F 16/735

(54) **METHOD AND APPARATUS FOR VIDEO RECOMMENDATION, AND DEVICE AND STORAGE MEDIUM**

(30) Priority: 24.06.2022 CN 202210731493
(71) Applicant: Douyin Vision (Beijing) Co., Ltd., Beijing 100041 (CN)
(72) Inventor: QIU, Hao, Beijing 100028 (CN); WANG, Anqi, Beijing 100028 (CN)
(74) Representative: Dentons UK and Middle East LLP
(86) International application number: PCT/CN2023/097865
(87) International publication number: WO 2023/246467

(57) **Abstract**

According to embodiments of the present disclosure, a method, apparatuses, device and storage medium for video recommendation are provided. The method comprises: selecting at least one candidate video to be recommended from one or more videos of a predetermined type posted in an application, the one or more videos of the predetermined type are accessible within a predetermined period of time; presenting respective images corresponding to the at least one candidate video using a widget associated with the application, and, in response to a selection of one of the presented images, presenting the candidate video corresponding to the selected image as a recommended video. By use of the widget, a user can be presented, in time, with the prompt of the content posted by other users with high social affinity in the application. The user can quickly browse the content by clicking the widget prompt without entering the application.

## Description

### Cross-Reference to Related Application(s)

This application claims the benefit of CN Patent Application No. 202210731493.0 filed on June 24, 2022, entitled "METHOD, APPARATUSES, DEVICE AND STORAGE MEDIUM FOR VIDEO RECOMMENDATION", which is hereby incorporated by reference in its entirety.

### FIELD

Example embodiments of the present disclosure generally relate to field of computer technology, and specifically, to methods, apparatuses, devices, and computer-readable storage media for video recommendation.

### BACKGROUND

With the development of social applications, more users are using social applications to post pictures or videos to show their daily life or view content posted by other uses. Users usually expect to be informed in time of the content posted by other users with higher social affinities in the application.

### SUMMARY

In a first aspect of the present disclosure, there is provided a method for video recommendation. The method comprises selecting at least one candidate video to be recommended from one or more videos of a predetermined type posted in an application, the one or more videos of the predetermined type being accessible within a predetermined period of time. The method further comprises presenting respective images corresponding to the at least one candidate video with a widget associated with the application, and, in response to a selection of one of the presented images, presenting the candidate video corresponding to the selected image in the application as a recommended video.

In a second aspect of the present disclosure, there is provided an apparatus for video recommendation. The device comprises a candidate video selection module configured to select at least one candidate video to be recommended from one or more videos of a predetermined type posted in an application, the one or more videos of the predetermined type being accessible within a predetermined period of time; an image presentation module configured to respective images corresponding to the at least one candidate video with a widget associated with the application; and a recommended video presentation module configured to, in response to a selection of one of the presented images, present the candidate video corresponding to the selected image in the application as a recommended video.

In a third aspect of the present disclosure, there is provided an electronic device. The apparatus comprising at least one processing unit; and at least one memory coupled to the at least one processing unit and storing instructions for execution by the at least one processing unit. The instructions, when executed by at least one processing unit, cause the apparatus to perform the method of the first aspect.

In a fourth aspect of the present disclosure, there is provided a computer-readable storage medium. The medium stores a computer program thereon which, when executed by a processor, implements the method of the first aspect.

It is to be understood that the contents described in the Summary are not intended to limit the key features or important features of the embodiments of the present disclosure, nor are they intended to limit the scope of the present disclosure. Other features of the present disclosure will be readily understood by the following description.

### BRIEF DESCRIPTION OF THE DRAWINGS

The above and other features, advantages and aspects of the embodiments of the present disclosure will become more apparent in combination with the drawings and with reference to the following detailed description. In the drawings, the same or similar reference numerals denote the same or similar elements, wherein:
Fig. 1 illustrates a schematic diagram of an example environment in which embodiments of the present disclosure can be implemented;
Fig. 2 illustrates a flowchart of a process for video recommendation according to some embodiments of the present disclosure;
Figs. 3A to 3C illustrate schematic diagrams of a widget according to some embodiments of the present disclosure;
Fig. 4 illustrates a schematic diagram of a video presentation page according to some embodiments of the present disclosure;
Figs. 5A to 5F illustrate schematic diagrams of video switching according to some embodiments of the present disclosure;
Figs. 6A and 6B illustrate schematic diagrams of a widget according to some embodiments of the present disclosure;
Fig. 7 illustrates a schematic diagram of a video capture page according to some embodiments of the present disclosure;
Figs. 8A to 8E illustrate schematic diagrams illustrating page interaction for adding widgets according to some embodiments of the present disclosure;
Fig. 9 illustrates a block diagram of an apparatus for video recommendation according to some embodiments of the present disclosure; and
Fig. 10 illustrates a block diagram of an apparatus capable of implementing various embodiments of the present disclosure.

### DETAILED DESCRIPTION

Embodiments of the present disclosure will be described in more detail below with reference to the accompanying drawings. Although some embodiments of the present disclosure are shown in the drawings, it is to be understood that the present disclosure can be realized in various forms, and should not be interpreted as being limited to the embodiments set forth herein. On the contrary, these embodiments are provided for a more thorough and complete understanding of the present disclosure. It is to be understood that the drawings and embodiments of the present disclosure are only for example purposes and are not intended to limit the scope of protection of the present disclosure.

In the description of embodiments of the present disclosure, the term "comprise(s)"and similar terms shall be understood as open inclusion, that is, "including but not limited to". The term "based on" is to be understood as "based at least in part on". The term "one embodiment" or "the embodiment" is to be understood as "at least one embodiment". The term "some embodiments" is to be understood as "at least some embodiments". Other explicit and implicit definitions may also be comprised below.

As described above, when using the social application, the user may expect to know in time the content posted by the poster who has a high social affinity with the user in the social application. This is the case especially for some content with predetermined limited presentation time, because the content can only be accessed in a limited period of time after being posted.

At present, a user has to open the application to browse the content posted by such posters who have high social affinity with the user or receive the recommendation prompt for such content. In this case, users are likely to miss some interesting new releases.

Some other auxiliary means associated with social applications, such as mobile desktop applets or plug-ins, can provide users with tips about the recommended posted content. However, such recommendations are often for business purposes rather than the close attention of users.

According to various embodiments of the present disclosure, a video recommendation scheme is proposed. For example, the electronic device may determine one or more video content accessible only for a predetermined period of time and select at least one candidate video content to be recommended. The electronic device can present a thumbnail of the candidate video content to the user with a widget. If the user clicks the thumbnail, he/she can directly enter the application to browse the video content corresponding to the thumbnail.

According to embodiments of the present disclosure, the user can be presented with the prompt of the content posted by the content posters with high social affinity in the application through the widget. In this way, the user can get to know in time that the content posters have posted content. On the other hand, the user can click the prompt of the widget, without entering the application, to quickly browse the posted content.

### Example Environment

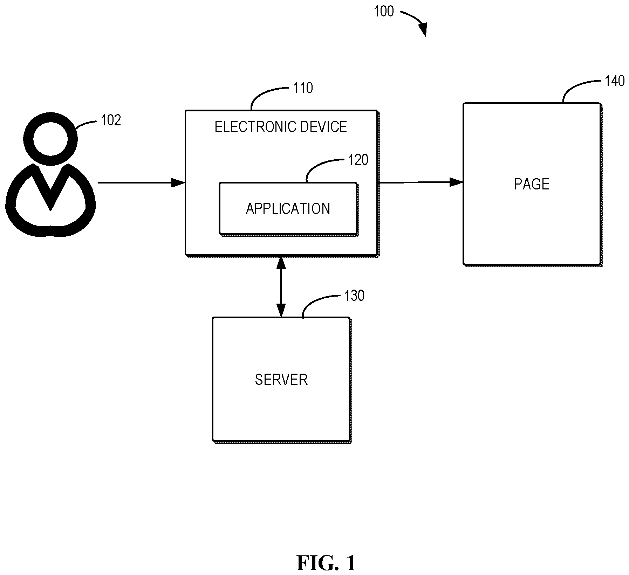

Fig. 1 shows a schematic diagram of an example environment 100 in which an example implementation according to the present disclosure can be implemented.

In this example environment 100, an application 120 is installed in the electronic device 110. The user 102 may interact with the application 120 via the electronic device 110 and/or an attached device of the electronic device 110. The application 120 may be a content sharing application that can provide services related to the consumption of multimedia content to the user 102, including browsing, commenting, forwarding, creating (e.g., photographing and / or editing), posting, and so on. In this context, "multimedia content" can be various forms of content, including video, audio, images, collection of images, text, and so on.

In the environment 100 of Fig. 1, if the application 120 is active, the electronic device 110 may present a page 140 of the application 120 to the user 102. The page 140 may be various kind of page that can be provided by the application 120, such as a presentation page of multimedia content, a content creation page, a content editing page, a messaging page, a personal page, a mall page, and the like.

In some embodiments, the electronic device 110 communicates with the server 130 to enable provisioning of services to the application 120. The electronic device 110 may be any type of mobile terminal, fixed terminal or portable terminal, including mobile phone, desktop computer, laptop computer, notebook computer, netbook computer, tablet computer, media computer, multimedia tablet, personal communication system (PCS) device, personal navigation device, personal digital assistant (PDA)An audio / video player, a digital camera / video camera, a positioning device, a television receiver, a radio broadcast receiver, an electronic book device, a game device, or any combination of the foregoing, including accessories and peripherals of these devices, or any combination thereof. In some embodiments, the electronic device 110 can also support any type of interface for the user (such as wearable circuit, etc.). The server 130 is various types of computing systems / servers capable of providing computing capabilities, including but not limited to mainframes, edge computing nodes, computing devices in a cloud environment, and the like.

It is to be understood that the structure and functions of the environment 100 are described for example purposes only, without suggesting any limitation as to the scope of the present disclosure.

### Video Recommendation Process

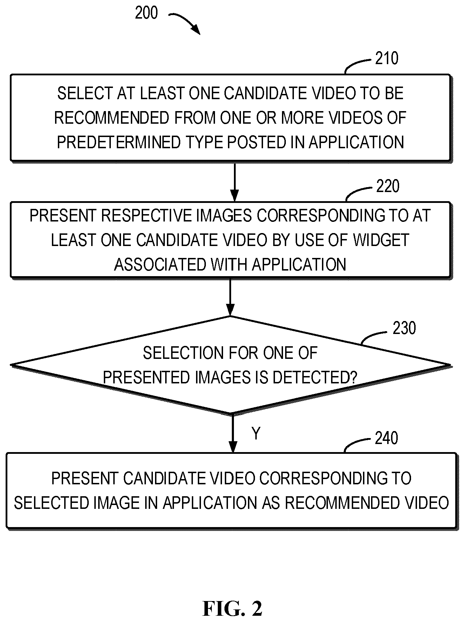

Fig. 2 illustrates a flowchart of a process 200 for video recommendation according to some embodiments of the present disclosure. The process 200 may be implemented at the electronic device 110. For ease of discussion, the process 200 will be described with reference to the environment 100 of Fig. 1.

As shown in Fig. 2, at block 210, the electronic device 110 selects at least one candidate video to be recommended from one or more videos of a predetermined type posted in the application 120. The one or more videos of the predetermined type are accessible just for a predetermined period of time.

The application 120 can support posters to post a variety of different types of videos. For example, some video content has only a predetermined access time limit. That is, after the predetermined time since the video content is posted, the video content will be hidden and become inaccessible to users other than the poster. It is to be understood that the predetermined time interval may be set by the poster or may be preset by the application 120. For example, when creating video content, the user can be guided to first select the type of video content to be posted, and the access time corresponding to the selected video content type can be presented to the user.

In some embodiments, one or more videos having a predetermined type are posted by a poster who has a high social affinity with the user 102 in the application 120. For example, these poster and the user 102 may follow each other in the application 120. Such a poster can also be a user indicated by the user 102 in the application 120 as having a high degree of social affinity.

In some embodiments, at least one candidate video to be recommended may be selected according to the respective post time of the one or more videos. For example, the latest posted video among one or more videos is taken as a candidate video. In this way, it is possible to make the user know in time what content of the predetermined types of video content are posted by a poster having a high degree of social affinity.

In other embodiments, the at least one candidate video to be recommended can be selected according to the remaining accessible time of the one or more videos. For example, a video whose accessible time is about to expire among one or more videos may be selected as a candidate video, thereby preventing the user from missing the last opportunity to browse these videos.

At block 220, the electronic device 110 presents respective images corresponding to the at least one candidate video by use of the widget associated with the application 120.

Generally speaking, a widget can be codes that can be executed on any web page based on hypertext markup language. The widget is generally considered as an important means for customizing the home screen of the electronic device 110. The widget can be presented in the form of video, image, map, news, or small game, which can make the application data and functions intuitively displayed, so that the user can access the corresponding application through the widget.

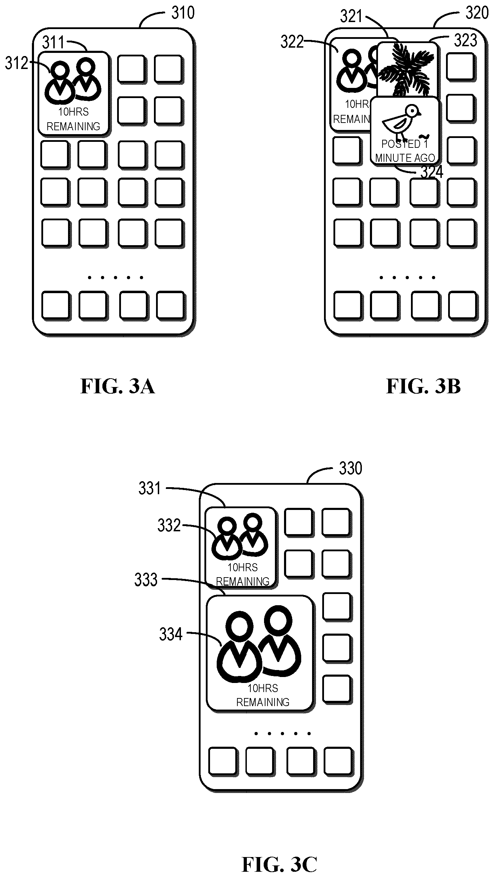

As used herein, the term "widget" may refer to a program or plug-in installed on an interface of the electronic device 110 such as a mobile desktop applet. Figs. 3A to 3C shows schematic diagrams of an example widget according to embodiments of the present disclosure.

As shown in Fig. 3A, the widget 311 on the interface 310 of the electronic device 110 can present an image corresponding to a candidate video to be recommended. Alternatively, or in addition, the remaining accessible time of the candidate video corresponding to the image may also be presented on the widget 311 while the image is presented. For example, an indication of "10 hours remaining" is displayed along with the image 312 to indicate that remaining accessible time of the candidate video corresponding to the image 312 is 10 hours. By presenting the remaining accessible time, the user can clearly know how much time is left to browse the posted content, thereby avoiding the user from missing the posted content of interest.

In some embodiments, respective images corresponding to a plurality of candidate videos may also be presented on the widget. As shown in Fig. 3B, the widget 321 on the interface 320 of the electronic device 110 may present images 322 to 324 corresponding to different candidate videos respectively.

Alternatively, or in addition, an indication of the remaining accessible time of the candidate video corresponding to the image and/or the post time of the candidate video may also be presented on the widget 321. For example, an indication of "10 hours remaining" is presented for the image 322 to indicate that remaining accessible time of the candidate video corresponding to the image 322 is 10 hours. An indication "posted 1 minute ago" is presented for the image 324 to indicate the post time of the candidate video corresponding to the image 324. Therefore, it is possible to provide users with recommendation of multiple candidate videos based on different post states of candidate videos. In this way, the video recommendation of the application can be more diversified and personalized, thereby improving the user experience.

In some embodiments, the image of the candidate video presented on the widget may be an image extracted from any frame of the candidate video. For example, the first frame of the candidate video may be taken as an image presented on the widget. The frames in the extracted candidate video may be scaled or intercepted to generate an image presented on the widget.

Alternatively, or in addition, when images corresponding to a plurality of candidate videos are presented on the widget, the images may be presented in a manner that partially overlaps each other, as shown in Fig. 3B. It is to be understood that these images may also be individually shown. Alternatively, or in addition, the sizes of images corresponding to different candidate videos may be designed to be the same or different. In some embodiments, the arrangement and form in which the images are presented may be implemented according to selections of the user 102.

Alternatively, or in addition, the electronic device 110 presents multiple widgets associated with the application 120 at the same time. These widgets can be presented in different sizes. As shown in Fig. 3C, the widgets 331 and 333 of the interface 330 of the electronic device 110 are both associated with the application 120. The images 332 and 334 presented on the widgets 331 and 333 may be the same. The widget 331 and the widget 333 have different presentation sizes on the interface 330. Alternatively, or in addition, the size in which the widget is presented can also be implemented according to the selection of the user 102.

In aid of the different presentation modes of the widgets and images on the widget as described above, the personalization of the user interface can be further enhanced.

Referring again to Fig. 2, if the electronic device 110 detects a selection for one of the presented images at block 230, the electronic device 110, at block 240, presents a candidate video corresponding to the selected image in the application 120 as a recommended video.

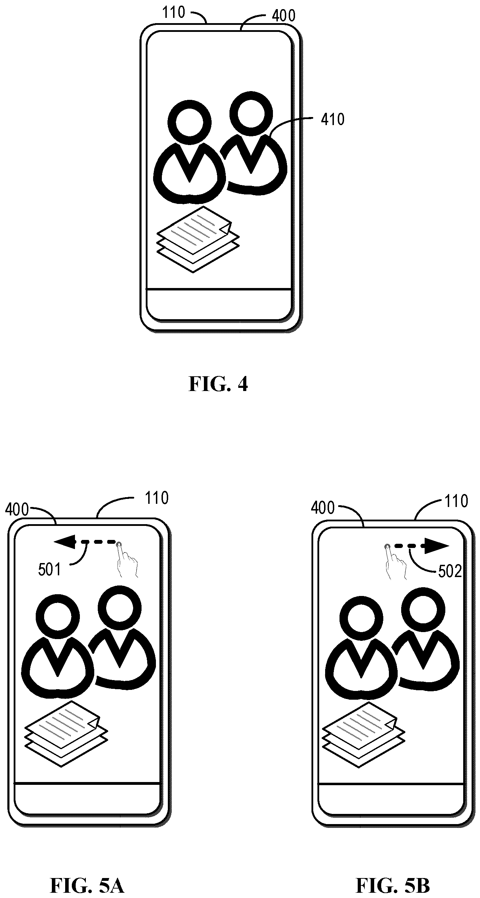

By way of example, if the image 312 in Fig. 3a is selected by the user, as shown in Fig. 4, the candidate video corresponding to the selected image 312 can be presented on the page 400 of the application 120 of the electronic device 110 as the recommended video 410.

In some embodiments, the electronic device 110 may receive a video switch command from the user 102 when the current recommended video 410 is presented, for example, when the reproduction of the current recommended video 410 is completed. If the video switch command is received, the electronic device 110 may present a further video different from the current recommended video 410 to the user 102. The further video is determined from a plurality of videos of the predetermined type, that is, accessible only for a predetermined period of time.

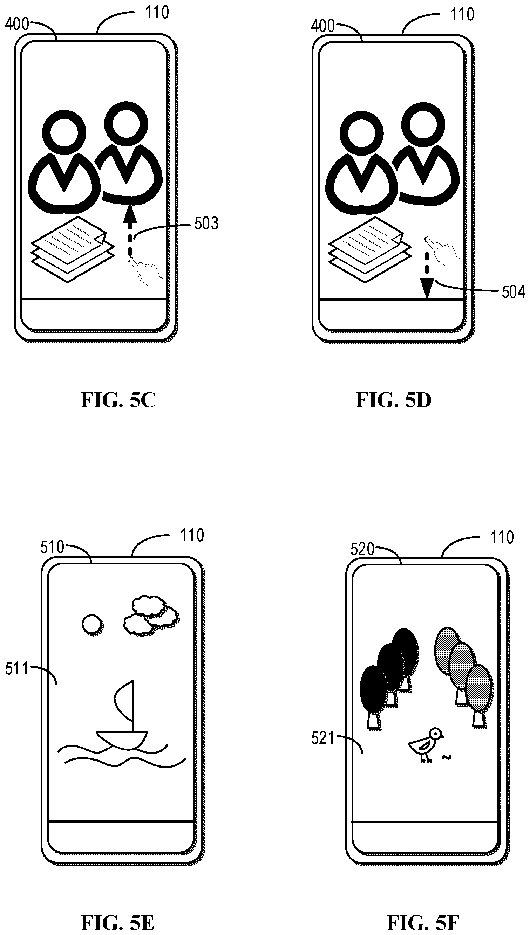

Depending on the received video switch command, the further video to be switched may be posted by the same poster as the current recommended video 410 or posted by a poster different from the current recommended video 410. The video switch command input by the user may be given by, for example, a slide gesture of the user on the page for presenting the currently recommended video 410. For example, as shown in Figs. 5A to 5D, the user 102 may give a video switch command by left slide 501, right slide 502, upward slide 503 or downward slide 504 on the page 400 where the current recommended video 410 is presented in the application 120.

For example, if the user 120 performs an upward slide 503 or a downward slide 504, the poster of the further video to be presented may be the same as the poster of the current recommended video 410. If the user 120 performs the left slide 501 or the right slide 502, the poster of the further video to be presented may be different from the poster of the current recommended video 410. Specifically, when the user 120 performs the upward slide 503, as shown in Fig. 5E, the poster of the further video 511 presented in the page 510 of the application is the same as the poster of the current recommended video 410. If the user 120 performs the left slide 501, as shown in Fig. 5F, the further video 521 presented in the page 520 of the application has a different poster from the current recommended video 410.

It is to be understood that it is also possible that when the user 120 performs an upward slide 503 or a downward slide 504, the poster of another video presented after switching may be different from the poster of the current recommended video 410. When the user 120 performs the left slide 501 or the right slide 502, the poster of another video presented after the switch may be the same as the poster of the current recommended video 410.

In this way, when the user enters the application and starts to browse the recommended video, he can browse the candidate videos of other predetermined types together, which provides a convenient way for the user to browse the predetermined types of videos.

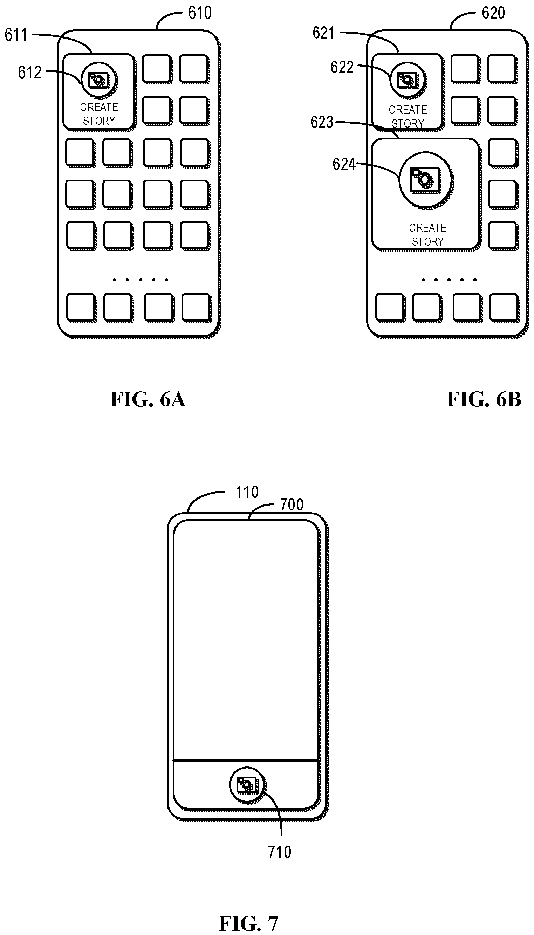

In some embodiments, the widget associated with the application 120 may also provide a guidance for the user 102 to shoot a predetermined type of video. Alternatively, or in addition, if the electronic device 110 determines that there is no candidate video of the predetermined type to be recommended in the application 120, the widget may provide guidance for the user 102 to create a video of such type which is accessible only for a predetermined period of time. As shown in Fig. 6A, the widget 611 may present a guidance icon 612 for video capture on the interface 610 of the electronic device 110.

Alternatively, or in addition, the electronic device 110 may also present multiple widgets simultaneously. These widgets may be presented in different sizes and are all used to guidance the user to take a video of the predetermined type. As shown in Fig. 6B, the widgets 621 and 623 of the interface 620 of the electronic device 110 may present icons 622 and 624 for guiding video capture, respectively. The widgets 621 and 623 have different sizes on the interface 620. Alternatively, or in addition, the size of the widget can also be implemented according to the selection of the user 102.

It is to be understood that it is also possible that when there are multiple (e.g., two) widgets on the interface, an icon for guiding shooting can be shown on one widget, and an image corresponding to the recommended video can be presented on another widget. In this way, the user can be provided with a choice of using different functions of the application, thereby enriching the functionality of the widget.

If the user 102 selects the icon for guiding video capture presented on the widget, as shown in Fig. 7, an interface 700 is displayed on the electronic device 110 that facilities the video capture in the application 120. Upon a selection of the user 102 of a button 710 for video capture, the capture a video of the predetermined type is initiated.

In some embodiments, the user 102 may be given a guidance to add a widget to the electronic device 110 in the application 120. The user 102 may be provided with a prompt of step(s) for adding a widget to the home screen interface of the electronic device 110. The guidance can be displayed, e.g., upon receipt of an input to add a widget from the user 102. For example, a button for adding a widget can be presented in a predetermined page of the application 120, and the guidance will be displayed if the user 102 presses the button.

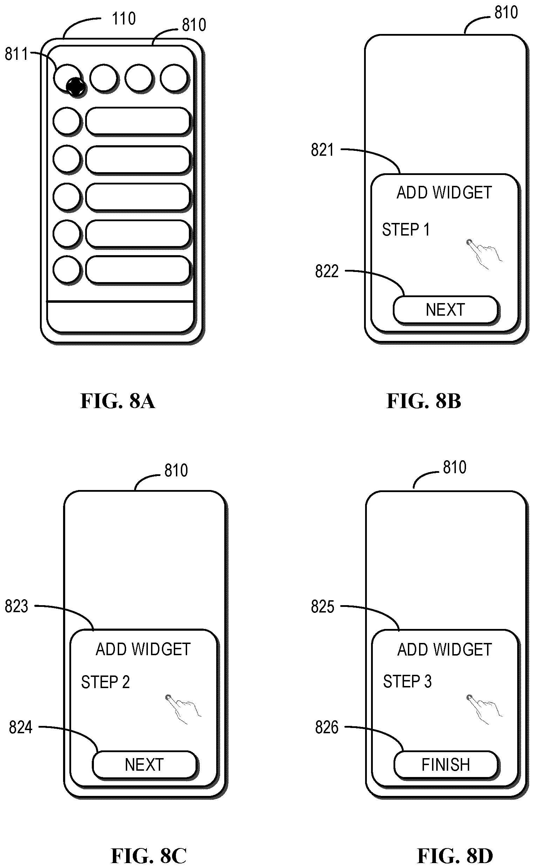

As shown in Fig. 8A, for example, a button 811 for adding a widget is displayed in the message page 810 of the application 120 of the electronic device 110. If the user 102 selects the button 811, a prompt to guidance the user to add a widget may be presented.

As shown in Figs. 8B to 8D, if the user 102 selects the button 811, the prompt 821 in Fig. 8B is displayed. The prompt 821 may indicate a first step in the process of adding a widget, for example. After the user 102 reads the prompted information of the first step, he/she can proceed to the next prompt 823 by pressing the button 822 in the prompt 821. The prompt 823 indicates a second step in the process of adding the widget. Likewise, after acquiring the prompted information of the second step, the user 102 can proceed to the next prompt 825 by selecting the button 824 in the prompt 823. The prompt 825 indicate a third step in the process of adding the widget. After acquiring the prompted information of the third step, the guidance of adding the widget to the electronic device 110 presented for the user 102 is over if the button key 826 in the prompt 825 is pressed.

For example, the prompts 821, 823, and 825 may be presented to the user 102 in the form of pop-up windows. The prompts of the operation steps presented in the prompts 821, 823 and 825 may be presented in the form of text and/or animation. In addition, the guidance process may be repeatedly provided to the user 102 so that the user 102 can correctly perform the adding operation of the widget.

It is to be understood that Figs. 8B to 8D only show example embodiments of providing a guidance process of adding a widget to the electronic device 110. Addition a widget to the electronic device 110 may comprise more or less stages. The number of prompts may increase or decrease accordingly.

In some embodiments, if the system environment of the electronic device 110 meets some requirements, the application 120 may directly add the widget to the electronic device 110 after receiving the instruction to add the widget input by the user 102.

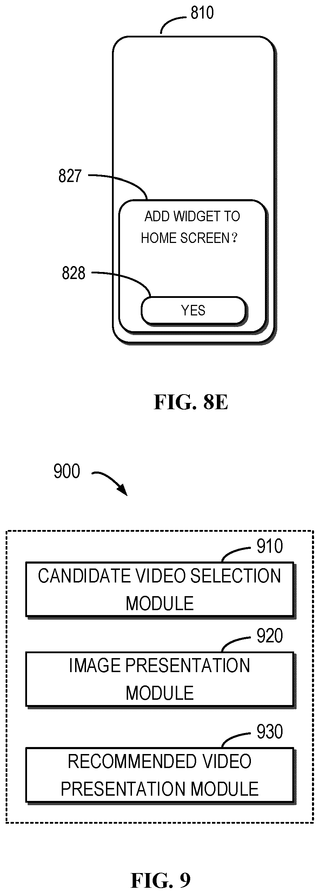

Still in reference to Fig. 8A, if the user 102 selects the button 811, a prompt may be presented to ask the user whether to add a widget to the electronic device 110, such as to the home screen of the electronic device 110. As shown in Fig. 8E, if the user 102 selects the button 811, a prompt 827 is presented on the page 810 to ask the user 102 whether to "add a widget to the home screen?". If the user 102 determines to add the widget to the home screen, for example, by selecting the button 828 in the prompt 827, the application 120 may add the widget to the home screen of the electronic device 110. The interface of the electronic device 110 to which the widget is added can be shown in Figs. 3A to 3C and Figs. 6A and 6B, for example, so the description will not be repeated here.

By providing guidance for users to add widgets or directly completing the addition of widgets according to the user's command, the users can be provided with good assistance in the use of application functions, thereby further improving the user experience.

According to embodiments of the present disclosure, the user can be presented with the prompt of the content posted by the content posters with high social affinity in the application through the widget. As such, the user can know in time that the content posters have posted the content. Moreover, the user can operate the widget without entering the application to quickly browse the posted content.

### Example Apparatuses and Devices

Embodiments of the present disclosure also provide a corresponding apparatus for implementing the above methods or processes. Fig. 9 shows a schematic block diagram of an apparatus 900 for video recommendation according to some embodiments of the present disclosure.

As shown, the apparatus 900 may comprise a candidate video selection module 910 configured to select at least one candidate video to be recommended from one or more videos of a predetermined type posted in the application. The one or more videos of the predetermined type are accessible for a predetermined period of time. The device 900 further comprises an image presentation module 920 configured to present images corresponding to the at least one candidate video by use of widgets associated with the application. The apparatus 900 further comprises a recommended video presentation module 930 configured to, in response to the selection of one of the presented images, present a candidate video corresponding to the selected image in the application as a recommended video.

In some embodiments, the candidate video selection module 910 may also be configured to select at least one candidate video according to the respective post time of one or more videos.

In some embodiments, the candidate video selection module 910 may also be configured to select at least one candidate video according to the respective remaining accessible time of the one or more videos.

In some embodiments, the one or more videos comprise a plurality of videos, and the apparatus 900 may also be configured to, in response to receiving in the application a video switch command while the recommended video is being presented, present a further video different from the recommended video among the plurality of videos in the application.

In some embodiments, the apparatus 900 may also be configured to present a guidance using the widget for capturing a video of the predetermined type.

In some embodiments, the apparatus 900 may also be configured to present an indication of the respective remaining accessible time of the at least one candidate video using the widget while presenting a corresponding image of each of the at least one candidate video.

In some embodiments, the apparatus 900 may also be configured to: present a guidance for adding a widget in a predetermined page of the application; and, in response to a selection of the guidance, presenting guidance steps for adding the widget or adding the widget to an environment where the application is running.

In some embodiments, the apparatus 900 may also be configured to select the one or more videos of the predetermined type from the videos of the application, so that the respective authors of the selected one or more videos and the current user of the application have social affinity exceeding a threshold in the application.

The modules comprised in the apparatus 900 may be implemented in various ways, including software, hardware, firmware, or any combination thereof. In some embodiments, one or more units may be implemented using software and / or firmware, such as machine executable instructions stored on a storage medium. In addition to or as an alternative to machine-executable instructions, some or all of the units in apparatus 900 may be implemented, at least in part, by one or more hardware logic components. By way of example and not limitation, exemplary types of hardware logic components that may be used include field programmable gate arrays (FPGAs), application specific integrated circuits (ASICs), application specific standards (ASSPs), systems on chips (SOCs), complex programmable logic devices (CPLD), etc.

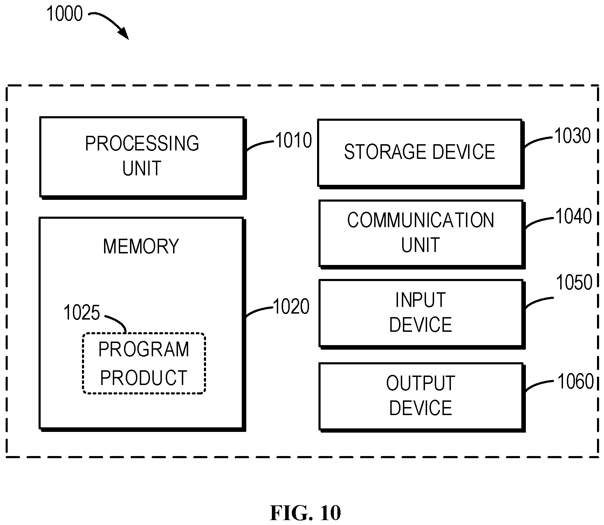

FIG. 10 shows a block diagram of a computing device/server 1000 in which one or more embodiments of the present disclosure may be implemented. It is to be understood that the computing device/server 1000 shown in FIG. 10 is merely exemplary and should not constitute any limitation on the functionality and scope of the embodiments described herein.

As shown in Figure 10, computing device/server 1000 is in the form of a general purpose computing device. Components of computing device/server 1000 may include, but are not limited to, one or more processors or processing units 1010, memory 1020, storage devices 1030, one or more communication units 1040, one or more input devices 1050, and one or more o7utput device 1060. The processing unit 1010 may be an actual or virtual processor and can perform various processes according to programs stored in the memory 1020. In a multi-processor system, multiple processing units execute computer-executable instructions in parallel to increase the parallel processing capabilities of the computing device/server 1000.

The computing device/server 1000 typically comprises a plurality of computer storage media. Such media may be any available media accessible to the computing device /server 1000, including but not limited to volatile and nonvolatile media, removable and non-removable media. The memory 1020 may be volatile memory (e.g., register, cache, random access memory (RAM)), non-volatile memory (e.g., read only memory (ROM), electrically erasable programmable read only memory (EEPROM), flash memory), or some combination thereof. The storage device 1030 may be a removable or non-removable medium, and may comprise a machine-readable medium, such as a flash drive, a magnetic disk, or any other medium, which may be capable of storing information and/or data (e.g., training data for training) and may be accessed within the computing device/server 1000.

The computing device/server 1000 may further comprise additional removable/non-removable, volatile/nonvolatile storage media. Although not shown in FIG. 10, disk drives for reading or writing from removable, non-volatile magnetic disks (e.g., "floppy disks") and optical disk drives for reading or writing from removable, non-volatile optical disks may be provided. In these cases, each driver may be connected to a bus (not shown) by one or more data medium interfaces. The memory 1020 may comprise a computer program product 1025 having one or more program modules configured to perform various methods or actions of various embodiments of the present disclosure.

The communication unit 1040 enables communication with other computing devices through communication media. Additionally, the functions of the components of the computing device/server 1000 may be implemented in a single computing cluster or multiple computing machines capable of communicating through communication connections. Thus, the computing device/server 1000 may operate in a networked environment using logical connections with one or more other servers, network personal computers (PCs), or another network node.

The input device 1050 may be one or more input devices, such as a mouse, a keyboard, a trackball, and the like. The output device 1060 may be one or more output devices, such as a display, a speaker, a printer, and the like. The computing device/server 1000 may also communicate, through the communication unit 1040 as needed, with one or more external devices (not shown), such as storage devices, display devices, and the like, with one or more devices that enable the user to interact with the computing device/server 1000, or with any device (e.g., network card, modem, etc.) that causes the computing device/server 1000 to communicate with one or more other computing devices. Such communication may be performed via an input/output (I/O) interface (not shown).

According to an example implementation of the present disclosure, there is provided a computer-readable storage medium having one or more computer instructions stored thereon, wherein the one or more computer instructions are executed by a processor to implement the method described above.

Various aspects of the present disclosure are described herein with reference to flowcharts and/or block diagrams of methods, apparatuses (systems) and computer program products implemented in accordance with the present disclosure. It is to be understood that each block of the flowchart and/or the block diagram and combinations of blocks in the flowchart and/or the block diagram may be implemented by computer readable program instructions.

These computer-readable program instructions may be provided to a general-purpose computer, a special purpose computer, or other processing unit programmable for the video recommendation device, thereby producing a machine such that these instructions, when executed by a computer or other processing unit programmable for the video recommendation apparatus, means for implementing the functions/actions specified in one or more of the flow charts and/or block diagrams are generated. These computer-readable program instructions may also be stored in a computer-readable storage medium that causes a computer, a programmable video recommendation apparatus, and/or other devices to operate in a specific manner, so that the computer-readable medium in which the instructions are stored comprises a manufactured article, which comprises instructions for implementing various aspects of the functions/actions specified in one or more blocks of the flowcharts and/or block diagrams.

The computer-readable program instructions may also be loaded onto the computer, other programmable video recommendation apparatus, or other devices, so that a series of operation steps are performed on the computer, other programmable video recommendation apparatus, or other devices to generate a computer implemented process, so as to enable the instructions executed on the computer, other programmable video recommendation apparatus or other devices to implement the functions/actions specified in one or more blocks in the flowcharts and/or block diagrams.

The flow diagrams and block diagrams in the accompanying drawings show the architecture, functions, and operations of possible implementations of systems, methods, and computer program products in accordance with various implementations of the present disclosure. In this regard, each block in the flowcharts or block diagrams may represent a module, a program segment or a part of instructions, and the module, the program segment or the part of instructions contains one or more executable instructions for implementing a specified logical function. In some alternative implementations, the functions indicated in the blocks may also occur in a different order than those indicated in the drawings. For example, two consecutive blocks may actually be executed substantially in parallel, and they may sometimes be executed in reverse order, which may depend on the functions involved. It is to be noted that each block in the block diagrams and/or the flowcharts, and the combination of the blocks in the block diagrams and/or the flowcharts, may be implemented by a dedicated hardware based system that performs a predetermined function or action, or may be implemented by a combination of dedicated hardware and computer instructions.

The implementations of the present disclosure have been described above, and the above description is example, not exhaustive, and is not limited to the disclosed implementations. Without departing from the scope and spirit of the described implementations, many modifications and changes will be obvious to those of ordinary skill in the art. The choice of terms used herein is intended to best explain the principle, practical application or improvement of technologies in the market of each implementation, or to enable other ordinary technicians in the technical field to understand each implementation disclosed herein.

## Claims

1. A method for video recommendation, comprising:
selecting at least one candidate video to be recommended from one or more videos of a predetermined type posted in an application, the one or more videos of the predetermined type being accessible within a predetermined period of time;
presenting respective images corresponding to the at least one candidate video with a widget associated with the application; and
in response to a selection of one of the presented images, presenting the candidate video corresponding to the selected image in the application as a recommended video.

2. The method of claim 1, wherein selecting the at least one candidate video comprises:
selecting the at least one candidate video according to respective posted time of the one or more videos.

3. The method of claim 1, wherein selecting the at least one candidate video comprises:
selecting the at least one candidate video according to respective remaining accessible time of the one or more videos.

4. The method of claim 1, wherein the one or more videos comprise a plurality of videos, and the method further comprises:
in response to receiving a video switch command in the application while the recommended video is presented, presenting a further video from the plurality of videos that is different from the recommended video in the application.

5. The method of claim 1, further comprising:
presenting a guidance for capturing the predetermined type of video with the widget.

6. The method of claim 1, further comprising:
while presenting the respective images corresponding to the at least one candidate video with the widget, presenting an indication of respective remaining accessible time of the at least one candidate video.

7. The method of claim 1, further comprising:
presenting a guidance for adding the widget in a predetermined page of the application; and
in response to a selection of the guide, performing one of the following:
presenting guidance steps for adding the widget, or
adding the widget to an environment where the application is running.

8. The method of claim 1, further comprising:
selecting the one or more videos of the predetermined type from videos of the application, so that social affinities in the in the application between respective authors of the one or more videos and a current user of the application exceeds a threshold.

9. An apparatus for video recommendation comprises:
a candidate video selection module configured to select at least one candidate video to be recommended from one or more videos of a predetermined type posted in an application, the one or more videos of the predetermined type being accessible within a predetermined period of time;
an image presentation module configured to respective images corresponding to the at least one candidate video with a widget associated with the application; and
a recommended video presentation module configured to, in response to a selection of one of the presented images, present the candidate video corresponding to the selected image in the application as a recommended video.

10. An electronic device comprising:
at least one processing unit; and
at least one memory coupled to the at least one processing unit and storing instructions for execution by the at least one processing unit, the instructions, when executed by the at least one processing unit, causing the electronic device to perform the method of any of claims 1-8.

11. A computer-readable storage medium storing a computer program thereon, the program, when executed by a processor, implementing the method of any of claims 1-8.
